(19) Europäisches Patentamt
European Patent Office
Office européen des brevets

(11) **EP 2 920 262 B1**

(12) **EUROPÄISCHE PATENTSCHRIFT**

(45) Veröffentlichungstag und Bekanntmachung des Hinweises auf die Patenterteilung:
**11.07.2018 Patentblatt 2018/28**

(21) Anmeldenummer: **13789259.2**

(22) Anmeldetag: **06.11.2013**

(51) Int Cl.:
***C09D 133/00*** *(2006.01)*

(86) Internationale Anmeldenummer:
**PCT/EP2013/073145**

(87) Internationale Veröffentlichungsnummer:
**WO 2014/075969 (22.05.2014 Gazette 2014/21)**

(54) **VERWENDUNG WÄSSRIGER POLYMERISATDISPERSION IN BESCHICHTUNGSMITTELN ZUR VERBESSERUNG DER FARBTONSTABILITÄT (COLOR RETENTION)**

USE OF AQUEOUS POLYMER DISPERSION IN COATING AGENTS FOR IMPROVING COLOUR RETENTION

UTILISATION D'UNE DISPERSION AQUEUSE DE POLYMÉRISAT DANS DES AGENTS DE REVÊTEMENT POUR AMÉLIORER LA STABILITÉ DE LA COULEUR (RÉTENTION DE LA COULEUR)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2012 US 201261726597 P**
**15.11.2012 EP 12192770**

(43) Veröffentlichungstag der Anmeldung:
**23.09.2015 Patentblatt 2015/39**

(73) Patentinhaber: **BASF SE**
**67056 Ludwigshafen am Rhein (DE)**

(72) Erfinder:
• **JAHNS, Ekkehard**
**69469 Weinheim (DE)**
• **ROLLER, Sebastian**
**68167 Mannheim (DE)**
• **KUREK, Alexander**
**86672 Thierhaupten (DE)**
• **CABRERA, Ivan**
**63303 Dreieich (DE)**
• **MOLLAT DU JOURDIN, Xavier**
**68165 Mannheim (DE)**
• **TISSIER, Nicolas**
**F-67000 Strasbourg (FR)**

(74) Vertreter: **BASF IP Association**
**BASF SE**
**G-FLP-C006**
**67056 Ludwigshafen (DE)**

(56) Entgegenhaltungen:
**EP-A1- 0 810 274 WO-A1-2011/009874**
**WO-A1-2011/051206**

**Beschreibung**

Gegenstand der vorliegenden Erfindung ist die Verwendung wässriger Polymerisatdispersionen, enthaltend (a) mindestens zwei Monomere M1 mit einer Glasübergangstemperatur ≥ 25 °C, (b) mindestens zwei Monomere M2 mit einer Glasübergangstemperatur < 25°C sowie weitere Monomere M3, als Bindemittel in Beschichtungsmitteln zur Verbesserung der Farbtonstabilität (Color Retention).

Wässrige Polymerisatdispersionen sind allgemein bekannt. Es handelt sich dabei um fluide Systeme, die als disperse Phase in wässrigem Dispergiermedium aus mehreren ineinander verschlungenen Polymerisatketten bestehenden Polymerisatknäuel, die sogenannte Polymermatrix oder Polymerisatpartikel, in disperser Verteilung befindlich enthalten. Der mittlere Durchmesser der Polymerisatpartikel liegt häufig im Bereich von 10 bis 1000 nm, insbesondere im Bereich von 50 bis 500 nm. Wässrige Polymerisatdispersionen werden in einer Vielzahl von technischen Anwendungen als Bindemittel eingesetzt.

Wäßrige Polymerdispersionen sind Standardbindemittel für Fassadenfarben geworden. Sie liefern stabile, langlebige, wasser- und wetterfeste, dekorative Anstriche, meist auf anorganischen Baustoffen, aber auch auf Holz oder Metalloberflächen. Lange Zeit waren weiße Fassadenfarben am weitesten verbreitet und haben die Oberflächen von Gebäuden geschützt. In den letzten Jahren sind jedoch vermehrt bunte Fassadenfarben zum Einsatz gekommen. Hierbei sind neue Probleme erschienen, unter anderem das sogenannte "Color Fading" dieser Fassadenfarben. Damit ist eine unerwünschte Aufhellung dieser Farben nach einiger Zeit an der Hausfassade gemeint. Dieses Phänomen kann bereits nach ein oder 2 Jahren bei bestimmten Farbtönen sichtbar werden, z. B. bei Rot oder Blau.

Besonders stark ist das Color Fading bei der Verwendung von organischen Pigmenten, die gerne wegen ihres intensiven Farbeindrucks verwendet werden. Starkes Color Fading wird auch bei der gemischten Verwendung von organischen Farbpigmenten zusammen mit weißem Titan-dioxidpigment beobachtet. Fachleute führen die Tendenz zum Color Fading überwiegend auf die Instabilität der organischen Farbpigmente selbst zurück. Diese Farbpigmente selbst haben eine geringere UV-Stabilität im Sonnenlicht, als zum Beispiel die anorganischen Farbpigmente. Die Qualität der organischen Bindemittel selbst wird von Fachleuten nicht als starker Einflussparameter diskutiert.

Wasserbasierte Polymerdispersionen als Bindemittel für Fassadenfarben und -putze werden üblicherweise aus je einem Hauptmonomeren mit hoher Glasübergangstemperatur (Hartmonomer) und einem Hauptmonomeren mit niedriger Glasübergangstemperatur (Weichmonomer) hergestellt. Als Hartmonomere werden meistens Styrol oder Methylmethacrylat gewählt, als Weichmonomer werden meisten n-Butylacrylat oder auch 2-Ethylhexylacrylat gewählt. Die Fassadenfarbenbindemittel werden deshalb als Styrolacrylate oder bei Verwendung von Methylmethacrylat als Hartmonomer als Reinacrylate bezeichnet. Die meisten Bindemittel bestehen aus Gründen der guten Bewitterungsstabilität bei Freibewitterung aus Styrol/n-Butylacrylat oder aus Methylmethacrylat/n-Butylacrylat. Die jeweiligen Mengen an Hart- und Weichmonomer werden je nach Anwendungsfall an der Glasübergangstemperatur ausgewählt, die für die jeweilige Verwendung notwendig ist. Bindemittel für lösemittelfreie Fassadenfarben haben meist eine Glasübergangstemperatur im Bereich von 0 - 5°C, lösemittelarme Fassadenfarben im Bereich von 5 - 20°C und lösemittelhaltige Fassadenfarben im Bereich von 20 bis 40°C.

In der EP771328 sind beispielsweise derartige Bindemittel des Stands der Technik beschrieben, so in den Beispielen A, J und K.

Durch gezielte Variation von Art und Menge der Monomeren ist es dem Fachmann erfindungsgemäß möglich, wässrige Polymerzusammensetzungen herzustellen, deren Polymere eine Glasübergangstemperatur im gewünschten Bereich aufweisen. Eine Orientierung ist mittels der Fox-Gleichung möglich. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für eine Berechnung der Glasübergangstemperatur von Mischpolymerisaten in guter Näherung:

$$1/T_g = x^1/T_g^1 + x^2/T_g^2 + \ldots x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989. Für Ethylacrylat wird ein Wert von -13 °C verwendet.

Die tatsächliche Glasübergangstemperatur lässt sich bestimmen durch Differential Scanning Calorimetrie (ASTM D 3418-08, sogenannte "midpoint temperature").

Aufgabe der vorliegenden Erfindung war es, Polymerdispersionen bereitzustellen, die eine deutlich bessere Color Retention in Fassadenfarben und Putzen mit organischen Bindemitteln zeigen, als vergleichbare Bindemittel aus dem Stand der Technik.

Die Aufgabe wurde gelöst durch die Verwendung einer wässrigen Polymerisatdispersion, enthaltend

(a) mindestens zwei Monomere M1 mit einer Glasübergangstemperatur $\geq$ 25 °C,
(b) mindestens zwei Monomere M2 mit einer Glasübergangstemperatur < 25°C

sowie gegebenenfalls weitere Monomere M3, als Bindemittel in Beschichtungsmitteln zur Verbesserung der Color Retention.

Das Color Fading wird manchmal mit der UV-Stabilität des Bindemittels in Beziehung gesetzt. Überraschenderweise bewirkt die Verwendung des erfindungsgemäßen Bindemittels aber sogar in stark gefüllten, bindemittelarmen Farben auch noch ein deutlich geringeres Color Fading. Dies ist vom Fachmann nicht vorhergesehen worden, weil bei dem geringen Bindemittelanteil in hochgefüllten Farben ein Witterungseinfluss, wie die Color Retention oder die UV-Stabilität auf eine Fassadenfarbe nur noch in sehr untergeordnetem Maßstab auf die Qualität des Bindemittels zurückzuführen ist.

Die Color Retention Verbesserung wurde für verschiedene, organische Pigmenttypen und Konzentrationen (Signal Rot, Blau, Gelb, Grün, usw.) gefunden.

Dies ist vom Fachmann nicht erwartet worden, da bei Fassadenfarben und Putzen ein großer Anteil von Pigmenten und Füllstoffen in den Farben die geringen Anteile an Bindemittel durch Lichtstreuung ausreichend schützen sollten und deshalb die Qualität des Bindemittels nach dem Stand der Technik von untergeordneter Bedeutung ist. So werden z.B. in Europa zu großen Anteilen Styrolacrylate als Bindemittel für Fassadenfarben und Putze eingesetzt, die bekannterweise eine schlechtere UV-Beständigkeit aufweisen, als z.B. Reinacrylate Bei den hellen oder weißen Fassadenfarben und Putzen gibt es aber keine signifikanten Defizite von Styrolacrylaten gegenüber Reinacrylaten bei Bewitterungsprüfungen.

Die Verwendung der mindestens vier Haupmonomeren M1 und M2 in einem Bindemittel verbessert überraschend die Haltbarkeit einer Fassadenfarbe so deutlich, dass die Color Retention deutlich verbessert wird und eine um mehrere Jahre haltbarere Farbe hergestellt werden kann.

In die Polymerisation können erfindungsgemäß folgende Monomere eingesetzt werden:
Beispiele für die Monomere M1 mit einer Glasübergangstemperatur $\geq$ 25 °C sind vinylaromatische Verbindungen, wie Vinyltoluol, alpha- und para-Methyl-styrol, alpha-Butylstyrol, 4-n-Butylstyrol und vorzugsweise Styrol, C1- bis C4-Alkylmethacrylate namentlich MMA, Ethylmethacrylat, n-Propylmethacrylat, i-Propylmethacrylat, n-Butylmethycrylat, t-Butylacrylat, i-Butylmethacrylat, t-Butylmethacrylat, t-Butylacrylat, Cyclohexylmethacrylat, Stearylacrylat, Vinylacetat, und/oder ethylenisch ungesättigte Nitrile. Beispiele für Nitrile sind Acrylnitril und Methacrylnitril. Vinylhalogenide sind mit Chlor, Fluor oder Brom substituierte ethylenisch ungesättigte Verbindungen, bevorzugt Vinylchlorid und Vinylidenchlorid.

Als Monomere M2 mit einer Glasübergangstemperatur < 25°C geeignet sind beispielsweise C1- bis C20-Alkylacrylate, wie Methylacrylat, Ethylacrylat, n- und i-Propylacrylat, n-, i- und sec-Butylacrylat, n- und i-Pentylacrylat, n-Hexylacrylat, 2-Ethylhexylacrylat, Heptylacrylat, Octylacrylat, C10-Isoamylguerbetacrylat, 2-Propylpentylacrylat, 1-Propylheptylacrylat, Laurylacrylat, C5- bis C20-Alkylmethacrylate wie n- und iso-Pentylmethacrylat, n-Hexylmethacrylat, Heptylmethacrylat, Octylmethacrylat, C10-Isoamylguerbetmethacrylat, 2-Propylpentylmethacrylat, 2-Propylheptylmethacrylat, Laurylmethacrylat, Vinylester von unverzweigten oder verzweigten Carbonsäuren mit 2 bis 11 C-Atomen, wie Vinylpropionat, Vinylbutyrat, 1-Methylvinylacetat, Vinylpivalat und Vinylester von $\alpha$-verzweigten Monocarbonsäuren mit 9 C-Atomen (VeoVa9$^R$ , Handelsname der Firma Shell)., wie Vinyl-2-Ethylhexanoat, Vinyllaurat, Vinylester von $\alpha$-verzweigten Monocarbonsäuren mit 10 oder 11 C-Atomen (VeoVa10$^R$, VeoVa11$^R$ , Handelsname der Firma Shell) und Vinylester von verzweigten Monocarbonsäuren mit 10 bis 13 C-Atomen (Exxar Neo12), C1- C20-Vinylether, wie Methylvinylether, Ethylvinylether, Propylvinylether, Butylvinylether, Pentylvinylether, Hexylvinylether, Heptylvinylether, Octylvinylether, Nonylylvinylether, Decylvinylether, etc, Butadien, Vinylidenchlorid, Butandiolmonoacrylat

Vorzugsweise setzt man bei den Monomeren M1 je ein hydrophileres Monomer und ein hydrophoberes Monomer ein, besonders bevorzugt die Paare Styrol/Methylmethacrylat oder Cyclohexylmethacrylat/Methylmethacrylat.

Vorzugsweise setzt man bei den Monomeren M2 je ein hydrophileres Monomer und ein hydrophoberes Monomer ein, besonders bevorzugt das Paar n-Butylacrylat/Ethylhexylacrylat.

Es können gegebenenfalls weiterhin in untergeordneten Mengen, beispielsweise in weniger als 10 Gew%, bevorzugt weniger als 8 Gew%, besonders bevorzugt weniger als 6 Gew%, Monomere M3 eingesetzt werden.

Beispiele für diese weiteren Monomere M3 sind ethylenisch ungesättigte Mono- und Dicarbonsäuren, wie Acrylsäure, Methacrylsäure, Itaconsäure, Fumarsäure und Maleinsäure, Aconitsäure, Mesaconsäure, Crotonsäure, Citraconsäure, Acryloxypropionsäure, Methacryloxypropionsäure, Vinylessigsäure, Monomethylitaconat, Mono-methylfumarat, Monobutylfumarat, Acrylsäureanhydrid, Methacrylsäureanhydrid, Maleinsäureanhydrid, oder Itaconsäureanhydrid,

Acrylamidoglykolsäure und Methacrylamidoglykolsäure, Acrylamid, Methacrylamid, und Isopropylacrylamid, substituierte (Meth)acrylamide, wie z.B. N,N-Dimethylamino(meth)acrylat; 3-Dimethylamino-2,2-dimethylpropyl-1-(meth)-acrylat, N-Dimethylaminomethyl(meth)acrylamid, N-(4-morpholinomethyl)(meth)acrylamide, Diacetonacrylamid; Acetoacetoxyethylmethacrylat; N-Methylol(meth)acrylamid, Polyethylenoxid(meth)acrylat, Methoxypolyethylenoxid(meth)-acrylat, Acrolein, Methacrolein; N-(2-Methacryloxyethyl)ethylenharnstoff, 1-(2-(3-Allyloxy-2-hydroxypropylamino) ethyl)-imidazolidin-2-on, Ureido(meth)acrylat, 2-Ethylenureidoethylmethactylat.

Weiterhin sind geeignet: ethylenisch ungesättigte, hydroxyalkylfunktionelle Comonomere, wie Methacrylsäure- und Acrylsäurehydroxyalkylester mit $C_1$- bis $C_5$-Alkylrest wie Hydroxyethyl-, Hydroxypropyl- oder Hydroxybutylacrylat oder -methacrylat; Hydroxyethyl(meth)acrylat und Hydroxypropyl(meth)acrylate; 4-Hydroxybutylacrylat, 4-Hydroxybutylmethacrylat, Glycidyl-(meth)acrylat, sowie N-Vinylpyrrolidon, Vinylimidazol.

Besonders bevorzugt werden Acrylsäure, Methacrylsäure, Acrylamid, Hydroxyethyl(meth)acrylat und Hydroxypropyl(meth)acrylat.

Weitere Beispiele für die Monomere M3 sind phosphorhaltige Monomere z. B. Vinylphosphonsäure und Allylphosphonsäure. Geeignet sind weiter die Mono- und Diester der Phosphonsäure und Phosphorsäure mit Hydroxyalkyl(meth)acrylaten, speziell die Monoester. Geeignet sind weiter Diester der Phosphonsäure und Phosphorsäure die einfach mit einem Hydroxyalkyl-(methacrylat und zusätzlich einfach mit einem davon verschiedenen Alkohol, z. B. einem Alkanol, verestert sind. Geeignete Hydroxyalkyl(meth)acrylate für diese Ester sind die im Folgenden als separate Monomere genannten, insbesondere 2-Hydroxyethyl(meth)acrylat, 3-Hy-droxypropyl(meth)acrylat, 4-Hydroxybutyl(meth)acrylat, etc. Entsprechende Dihydrogenphosphatestermonomere umfassen Phosphoalkyl(meth)acrylate, wie 2-Phosphoethyl(meth)acrylat, 2-Phosphopropyl(meth)acrylat, 3-Phosphopropyl(meth)acrylat, Phosphobutyl(meth)acrylat und 3-Phospho-2-hydroxypropyl(meth)acrylat. Geeignet sind auch die Ester der Phosphonsäure und Phosphorsäure mit alkoxilierten Hydroxyalkyl(meth)acrylaten, z. B. die Ethylenoxidkondensate von (Meth)acrylaten, wie $H_2C=C(CH_8)COO(CH_2CH_2O)_nP(OH)_2$ und $H_2C=C(CH_3)COO(CH_2CH_2O)_nP(=O)(OH)_2$, worin n für 1 bis 50 steht. Weiter geeignet sind Phosphoalkylcrotonate, Phosphoalkylmaleate, Phosphoalkylfumarate, Phosphodialkyl(meth)-acrylate, Phosphodialkylcrotonate und Allylphosphate. Weitere geeignete Phosphorgruppen-haltige Monomere sind in WO 99/25780 und US 4,733,005 beschrieben, worauf hier Bezug genommen wird.

Weiterhin geeignet sind Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäuren und 2-Acrylamido-2-methylpropansulfonsäure. Geeignete Styrolsulfonsäuren und Derivate davon sind Styrol-4-sulfonsäure und Styrol-3-sulfonsäure und die Erdalkali- oder Alkalimetallsalze davon, z. B. Natrium-styrol-3-sulfonat und Natrium-styrol-4-sulfonat, Poly(allylglycidyl ether)und Mischungen davon, in Form verschiedener Produkte der Bezeichnung Bisomer ® von Laporte Performance Chemicals, UK. Dazu zählt z. B. Bisomer ® MPEG 350 MA, ein Methoxypolyethylenglykolmonomethacrylat. Die funktionellen Gruppen der Monomere tragen zur Vermittlung der kolloidalen Stabilisierung der Zusammensetzung bei, insbesondere auch dann, wenn die gesamte Formulierung auch Füllstoffe, wie z.B. Calciumcarbonat oder andere enthält. Dabei findet die Vernetzung entweder durch Reaktion miteinander oder durch Zugabe eines weiteren Vernetzungsmittels statt. Bevorzugt findet die Vernetzung erst nach der eigentlichen Filmbildung statt.

Monomere, die üblicherweise die innere Festigkeit von Verfilmungen wäßriger Polymerisatdispersionen erhöhen, weisen normalerweise wenigstens eine Epoxy-, Hydroxy-, N-Methylol-, Carbonyl- oder wenigstens zwei nicht konjugierte ethylenisch ungesättigte Doppelbindungen auf. Beispiele hierfür sind N-Alkylolamide von 3 bis 10 C-Atome aufweisenden α,β-mono-ethylenisch ungesättigten Carbonsäuren sowie deren Ester mit 1 bis 4 C-Atome aufweisenden Alkanolen, unter denen das N-Methylolacrylamid und das N-Methylolmethacrylamid ganz besonders bevorzugt sind, zwei Vinylreste aufweisende Monomere, zwei Vinylidenreste aufweisende Monomere sowie zwei Alkenylreste aufweisende Monomere. Besonders vorteilhaft sind dabei die Diester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate wie Ethylenglykoldiacrylat, 1,3-Butylenglykoldiacrylat, 1,4-Butylenglykoldiacrylat sowie Propylenglykoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat.

Funktionelle Vernetzergruppen sind beispielsweise Keto-, Aldehyd-und/oder acetoacetoxy Carbonylgruppen und die anschließend zugesetzten, formulierten Vernetzungsmittel können ein Polyamin oder Polyhydrazid wie Adipinsäuredihydrazid (ADDH), Oxalsäuredihydrazid, Phthalsäuredihydrazid, Terephthalsäuredihydrazid, Isophorondiamin und 4,7-Dioxadecan-1,1-O-Diamin umfassen oder ein Vernetzungsmittel das semi-Carbazid oder hydrazinfunktionelle Gruppen trägt. Alternativ könnte das Polymer hydrazidfunktionellen Gruppen tragen und das anschließend formulierte Vernetzungsmittel könnte ketofunktionelle Gruppen enthalten.

Die funktionellen Gruppen können auch Carboxylfunktionen sein und das anschließend formulierte Vernetzungsmittel könnte Aziridin-, Epoxid-oder Carbodiimid funktionellen Gruppen enthalten, oder die funktionellen Gruppen können silanfunktionellen Gruppen sein und das anschließend formulierte Vernetzungsmittel kann ebenfalls silanfunktionelle Gruppen enthalten. Die funktionellen Gruppen können auch Ureidogruppen sein und das anschließend zugegebene Vernetzungsmittel ein Polyaldehyd, beispielsweise ein eins bis zehn C-Atome aufweisendes $\alpha,\omega$-Dialdehyde wie Glyoxal, Glutardialdehyd oder Malondialdehyd bzw. deren Acetale und Halbacetale. Siehe EP 0789724.

Dabei findet die Vernetzung entweder durch Reaktion miteinander oder durch Zugabe eines weiteren Vernetzungsmittels statt. Bevorzugt findet die Vernetzung erst nach der eigentlichen Filmbildung statt.

Dabei ist es wichtig nicht zu viel zusätzliches Vernetzungsmittel einzusetzen, da dies zu Restvernetzungsmittel-Rückständen führen kann. Zu wenig Vernetzungsmittel andererseits kann zu einer löslichen Beschichtung führen. Dabei ist es wichtig nicht zu viel zusätzliches Vernetzungsmittel einzusetzen, da dies zu Restvernetzungsmittel-Rückständen führen kann. Zu wenig Vernetzungsmittel andererseits kann zu einer löslichen Beschichtung führen.

Selbstverständlich sind auch Kombinationen von den verschiedenen funktionellen Gruppen und Vernetzungsmechanismen möglich.

Vinylmonomeren enthaltend vernetzende Gruppen sind beispielsweise Allyl, Glycidyl-oder Acetoacetoxyester, Acetoacetoxyamide, Keto-und Aldehyd-funktionelle Vinylmonomeren, ketohaltigen Amide wie Diacetonacrylamid oder Silan(meth)acrylmonomere.

Bevorzugte vernetzende Gruppen tragende Vinylmonomere sind Acetoacetoxyethylmethacrylat (AAEM), Diacetonacrylamid (DAAM) und Silan(meth)acryl-Monomere; am meisten bevorzugt DAAM.

Bevorzugte Vernetzungsmechanismen umfassen Vernetzung von silanfunktionellen Gruppen und Vernetzung von ketofunktionellen mit hydrazidfunktionellen Gruppen.

Am meisten bevorzugt ist die Kombination von DAAM und ADDH Vernetzung.

Das Gewichtsverhältnis der Monomere M1 zu M2 zu M3 hängt von der bevorzugten Anwendungen des Bindemittels ab und bestimmt sich damit wesentlich über die Glasübergangstemperatur der Polymere, hergestellt aus der Mischung aller Monomere.

Als Beispiele für bevorzugte Mischungen seien genannt:

a) Sehr weiche, elastische Bindemittel (Tg ca. -24°C): 17 bis 27% Monomere M1 (gerechnet auf Basis Methylmethacrylat/Styrol), 68 - 77 % Monomere M2 und 0,1 bis 10% Monomere M3 (gerechnet auf n-Butylacrylat/2-Ethylhexylacrylat), wobei die Styrolmenge bei den Monomeren M1 im Bereich von 5-15% liegt.

b) Weiche, selbstverfilmende Bindemittel (Tg ca. 0°C): 34 bis 44% Monomere M1 (gerechnet auf Basis Methylmethacrylat/Styrol), 49 - 59 % Monomere M2 und 0,1 bis 10% Monomere M3 (gerechnet auf n-Butylacrylat/2-Ethylhexylacrylat), wobei die Styrolmenge bei den Monomeren M1 im Bereich von 10-20% liegt.

c) Bindemittel für Fassadenfarben und Putze, die kleine Anteile Filmbildehilfsmittel benötigen (Tg ca. 15 - 20°C): 37 bis 47% Monomere M1 (gerechnet auf Basis Methylmethacrylat/Styrol), 48 - 58 % Monomere M2 und 0,1 bis 10% Monomere M3 (gerechnet auf n-Butylacrylat/2-Ethylhexylacrylat), wobei die Styrolmenge bei den Monomeren M1 im Bereich von 10-25% liegt.

d) Bindemittel für Fassadenfarben und Putze, die größere Anteile Filmbildehilfsmittel benötigen (Tg ca. 30 - 40°C): 60 bis 70% Monomere M1 (gerechnet auf Basis Methylmethacrylat/Styrol), 24 - 34 % Monomere M2 uns 0,1 bis 10% Monomere M3 (gerechnet auf n-Butylacrylat/2-Ethylhexylacrylat), wobei die Styrolmenge bei den Monomeren M1 im Bereich von 10-25% liegt.

Weitere bevorzugte Kombinationen können anhand der obigen Auflistung leicht selbst bestimmt werden, für Glasübergangstemperaturen, die nicht genannt wurden.

Bevorzugte Monomerkombinationen M1 sind die Paare Styrol/Methylmethacrylat oder Cyclohexylmethacrylat/Methylmethacrylat und für die Monomerkombinationen M2 das Paar n-Butylacrylat/Ethylhexylacrylat.

Aus ökologischen Gründen wird eine Verfilmung des Bindemittels im Bereich von < 0 bis 40°C angestrebt, so dass keine oder nur geringe Mengen eines Filmbildehilfsmittels benötigt werden.

Die Herstellung der erfindungsgemäßen Polymerdispersion erfolgt durch Emulsionspolymerisation. Bei der Emulsionspolymerisation werden ethylenisch ungesättigte Verbindungen (Monomere) in Wasser polymerisiert, wobei üblicherweise ionische und/oder nichtionische Emulgatoren und/oder Schutzkolloide bzw. Stabilisatoren als grenzflächenaktive Verbindungen zur Stabilisierung der Monomertröpfchen und der später aus den Monomeren gebildeten Polymerteilchen verwendet werden. Erfindungsgemäß erfolgt aber die Polymerisation emulgatorarm. Vorzugsweise wird insgesamt weniger als 2,5 oder weniger als 2 ,0 Gew.% Emulgator, insbesondere weniger als 1,5 Gew.%, bezogen auf den Feststoffgehalt der Polymerdispersion eingesetzt.

Die Herstellung der Polymerdispersion, erfolgt üblicherweise in Gegenwart wenigstens einer grenzflächenaktiven Verbindung. Eine ausführliche Beschreibung geeigneter Schutzkolloide findet sich in Houben-Weyl, Methoden der organischen Chemie, Band XIV/1, Makromolekulare Stoffe, Georg Thieme Verlag, Stuttgart, 1961, S. 411 bis 420. Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Als Emulgatoren sind sowohl anionische, kationische als auch nichtionische Emulgatoren geeignet. Vorzugsweise werden als grenzflächenaktive Substanzen Emulgatoren eingesetzt, deren relative Molekulargewichte üblicherweise unterhalb derer von Schutzkolloiden liegen. Insbesondere hat es sich bewährt, ausschließlich anionische Emulgatoren oder eine Kombination aus wenigstens einem anionischen Emulgator und wenigstens einem nichtionischen Emulgator einzusetzen.

Brauchbare nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_{10}$), Ethoxylate langkettiger Alkohole (EO-Grad: 3 bis 100, Alkylrest: $C_8$-$C_{36}$) sowie Polyethylenoxid/Polypropylenoxid-Homo- und Copolymere. Diese können die Alkylenoxideinheiten statistisch verteilt oder in Form von Blöcken einpolymerisiert enthalten. Gut geeignet sind z. B. EO/PO-Blockcopolymere. Bevorzugt werden Ethoxylate langkettiger Alkanole (Alkylrest $C_1$-$C_{30}$, mittlerer Ethoxylierungsgrad 5 bis 100) und darunter besonders bevorzugt solche mit einem linearen $C_{12}$-$C_{20}$-Alkylrest und einem mittleren Ethoxylierungsgrad von 10 bis 50 sowie ethoxylierte Monoalkylphenole, eingesetzt.

Geeignete anionische Emulgatoren sind beispielsweise Alkali- und Ammoniumsalze von Alkylsulfaten (Alkylrest: $C_8$-$C_{22}$), von Schwefelsäurehalbestern ethoxylierter Alkanole (EO-Grad: 2 bis 50, Alkylrest: $C_{12}$-$C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$-$C_{18}$). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208. Als anionische Emulgatoren sind ebenfalls Bis(phenylsulfonsäure)ether bzw. deren Alkali- oder Ammoniumsalze, die an einem oder beiden aromatischen Ringen eine $C_4$-$C_{24}$-Alkylgruppe tragen, geeignet. Diese Verbindungen sind allgemein bekannt, z. B. aus der US-A-4,269,749, und im Handel erhältlich, beispielsweise als Dowfax® 2A1 (Dow Chemical Company).

Geeignete kationische Emulgatoren sind vorzugsweise quartäre Ammoniumhalogenide, z. B. Trimethylcetylammoniumchlorid, Methyltrioctylammoniumchlorid, Benzyltriethylammonium-chlorid oder quartäre Verbindungen von N-$C_6$-$C_{20}$-Alkylpyridinen, -morpholinen oder -imida-zolen, z. B. N-Laurylpyridiniumchlorid.

Den Polymerdispersionen können weiterhin übliche Hilfs- und Zusatzstoffe zugesetzt werden. Dazu zählen beispielsweise den pH-Wert einstellende Substanzen, Reduktions- und Bleichmittel, wie z. B. die Alkalimetallsalze der Hydroxymethansulfinsäure (z. B. Rongalit® C der BASF Aktiengesellschaft), Komplexbildner, Desodorantien, Geruchsstoffe und Viskositätsmodifizierer, wie Alkohole, z. B. Glycerin, Methanol, Ethanol, tert.-Butanol, Glykol etc. Diese Hilfs- und Zusatzstoffe können den Polymerdispersionen in der Vorlage, einem der Zuläufe oder nach Abschluss der Polymerisation zugesetzt werden.

Vorzugsweise erfolgt die Neutralisation von Säuregruppen des ersten Polymerisats durch zumindest teilweisen Zulauf eines Neutralisationsmittels vor und/oder während der Polymerisation der zweiten Stufe. Das Neutralisationsmittel kann dabei in einem gemeinsamen Zulauf mit den zu polymerisierenden Monomeren oder in einem separaten Zulauf zugegeben werden. Nach Zulauf sämtlicher Monomere ist vorzugsweise die zur Neutralisation von mindestens 10%, vorzugsweise 25 bis 100% oder 50 bis 95% Säureäquivalenten benötigte Menge an Neutralisationsmittel in dem Polymerisationsgefäß enthalten.

Die Emulsionspolymerisation kann mit wasserlöslichen Initiatoren gestartet werden. Wasserlösliche Initiatoren sind z.B. Ammonium- und Alkalimetallsalze der Peroxodischwefelsäure, z.B. Natriumperoxodisulfat, Wasserstoffperoxid oder organische Peroxide, z.B. tert-Butylhydroperoxid. Als Initiator geeignet sind auch so genannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z.B. um die bereits vorstehend genannten Initiatoren für die Emulsionspolymerisation. Bei der Reduktionskomponenten handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Ei-sen(II)sulfat/Natriumperoxidisulfat, tert-Butylhydroperoxid/ Natriumdisulfit, tert-Butylhydroper-oxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Initiatoren werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration der Initiatoren 0,1 bis 30 Gew.-%, bevorzugt 0,2 bis 20 Gew.-%, besonders bevorzugt 0,3 bis 10 Gew.-%, bezogen auf die zu polymerisierenden Monomeren. Es können auch mehrere, verschiedene Initiatoren bei der Emulsionspolymerisation Verwendung finden.

Die Emulsionspolymerisation erfolgt in der Regel bei 30 bis 130°C, vorzugsweise bei 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Zur Entfernung der Restmonomeren wird üblicherweise auch nach dem Ende der eigentlichen Emulsionspolymerisation, d.h. nach einem Umsatz der Monomeren von mindestens 95 % Initiator zugesetzt. Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-%, besonders bevorzugt größer oder gleich 50 Gew.-% erhalten. Für eine hohe Raum/ Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Häufig ist es vorteilhaft, wenn die nach Abschluss der Polymerisationsstufen erhaltene wässrige Polymerisatdispersion einer Nachbehandlung zur Reduzierung des Restmonomerengehalts unterzogen wird. Dabei erfolgt die Nachbehandlung entweder chemisch, beispielsweise durch Vervollständigung der Polymerisationsreaktion durch Einsatz eines effektiveren Radikalinitiatorensystems (sogenannte Nachpolymerisation) und/oder physikalisch, beispielsweise durch Strippung der wässrigen Polymerisatdispersion mit Wasserdampf oder Inertgas. Entsprechende chemische und/oder physikalische Methoden sind dem Fachmann geläufig [siehe beispielsweise EP-A 771 328, DE-A 196 24 299, DE-A 196 21 027, DE-A 197 41 184, DE-A 197 41 187, DE-A 198 05 122, DE-A 198 28 183, DE-A 198 39 199, DE-A 198 40 586 und 198 47 115]. Dabei bietet die Kombination aus chemischer und physikalischer Nachbehandlung den Vorteil, dass neben den nicht umgesetzten ethylenisch ungesättigten Monomeren, auch noch andere störende leichtflüchtige organischen Bestandteile (die sogenannten VOCs [volatile organic compounds]) aus der wässrigen Polymerisatdispersion entfernt werden. Die erfindungsgemäßen Dispersionen werden vorzugsweise nicht chemisch nachbehandelt.

Die nach dem erfindungsgemäßen Verfahren zugänglichen wässrigen Polymerisatdispersionen weisen Polymerisatteilchen auf, die eine gewichtsmittlere Teilchendurchmesser $D_w$ im Bereich $\geq$ 10 und < 500 nm, bevorzugt $\geq$ 20 und $\leq$ 200 nm und insbesondere bevorzugt $\geq$ 20 nm bis $\leq$ 100 nm aufweisen. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere $D_{w50}$-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Die nach dem erfindungsgemäßen Verfahren zugänglichen wässrigen Polymerisatdispersionen mit gewichtsmittleren Teilchendurchmessern $D_w \leq$ 100 nm weisen eine überraschend gute Color Retention auf und eignen sich daher besonders als Bindemittel für bunte Fassadenfarben.

Ferner sind aus den erfindungsgemäßen wässrigen Polymerisatdispersionen in einfacher Weise (beispielsweise Gefrier- oder Sprühtrocknung) die entsprechenden Polymerisatpulver zugänglich. Diese erfindungsgemäß zugänglichen Polymerisatpulver lassen sich ebenfalls als Komponente bei der Herstellung von Beschichtungsmitteln für organische Substrate sowie zur Modifizierung von mineralischen Bindemitteln einsetzen.

Die wässrige Polymerdispersion weist üblicherweise einen Feststoffgehalt von 20 bis 70 Gew.-%, vorzugsweise 35 bis 60 Gew.-%, auf.

Die erhaltene wässrige Polymerdispersion kann als solche oder gemischt mit weiteren, in der Regel filmbildenden, Polymeren als Bindemittelzusammensetzung in wässrigen Beschichtungsmitteln, verwendet werden.

Selbstverständlich können die nach dem erfindungsgemäßen Verfahren zugänglichen erfindungsgemäßen wässrigen Polymerisatdispersionen auch als Komponente bei der Herstellung von Klebstoffen, Dichtmassen, Kunststoffputzen, Papierstreichmassen, Faservliesen, und Beschichtungsmitteln für organische Substrate sowie zur Modifizierung von mineralischen Bindemitteln eingesetzt werden.

Ein weiterer Gegenstand der Erfindung ist ein Beschichtungsmittel in Form einer wässrigen Zusammensetzung, enthaltend

- wenigstens eine erfindungsgemäße Polymerisatdispersion, wie zuvor definiert,

7

- gegebenenfalls wenigstens einen (an)organischen Füllstoff und/oder wenigstens ein (an)organisches Pigment,
- gegebenenfalls wenigstens ein übliches Hilfsmittel, und
- Wasser.

Die erfindungsgemäßen Bindemittelzusammensetzungen kommen vorzugsweise in wässrigen Anstrichmitteln, insbesondere in Fassadenfarben zum Einsatz.

Füllstoffe können zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Geeignete Pigmente sind beispielsweise anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Geeignet sind auch synthetische Weißpigmente mit Lufteinschlüssen zur Erhöhung der Lichtstreuung, wie die Ropaque®- und AQACell®-Dispersionen. Weiterhin geeignet sind die Luconyl®-Marken der Fa. BASF SE, wie z.B. das Lyconyl®-Gelb, Lyconyl®-Braun und Luconyl®-Rot, insbesondere die transparanten Varianten.

Geeignete Füllstoffe sind z. B. Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf oder enthalten keine Füllstoffe.

Feinteilige Füllstoffe können auch zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Der Anteil der Pigmente kann, durch die Pigmentvolumenkonzentration (PVK), beschrieben werden. Erfindungsgemäße Beschichtungsmittel in haben z. B. eine PVK im Bereich von 5 bis 85, wobei die Bindemittel natürlich auch für Klarlackanwendungen geeignet sind, in denen keine oder nur sehr geringen Anteile an Pigmenten und/oder Füllstoffen zugesetzt sind.

Das erfindungsgemäße Beschichtungsmittel (wässrige Anstrichmittel) kann neben der Polymerdispersion noch weitere Hilfsmittel enthalten.

Zu den üblichen Hilfsmitteln zählen neben den bei der Polymerisation eingesetzten Emulgatoren, Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Weitere geeignete Hilfsmittel sind Verlaufsmittel, Entschäumer, Biozide und Verdicker. Geeignete Verdicker sind z. B. Assoziativverdicker, wie Polyurethanverdicker. Die Menge des Verdickers beträgt vorzugsweise weniger als 1 Gew.-%, besonders bevorzugt weniger als 0,6 Gew.-% Verdicker, bezogen auf Feststoffgehalt des Anstrichmittels.

Weiterhin geeignete Hilfsmittel sind Filmbildehilfs- oder Koaleszenzhilfsmittel. Bevorzugt werden beispielsweise Testbenzin, Ethylenglykol, Propylenglykol, Glycerin, Ethanol, Methanol, wassermischbare Glykolether und deren Acetate wie Diethylenglykol, 1-Methoxy-2-propanol, 2-Amino-2-methyl-1-propanol, Isooctanol, Butylglykol, Butyldiglykol, Diethylenglykol-Monobutylether, Dipropylenglykolmonomethyl- oder Dipropylenglykolmonobutylether, Dipropylenglykolmethylether, Dipropylenglykol-propylether, Dipropylenglykol-n-butylether, Tripropylenglykol-n-butylether, Propylenglykolphenylether, Butylglykolacetat, Butyldiglykolacetat, 2,2,4-Trimethyl-1,3-pentandiolmonoisubutyrat, Disobutylester langkettiger Dicarbonsäuren wie Lusolvan® FBH oder Tripropylenglykolmonoisobutyrat eingesetzt.

Die Herstellung der erfindungsgemäßen Anstrichmittel erfolgt in bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten, und anschließend erst das polymere Bindemittel, d. h. in der Regel die wässrige Dispersion des Polymeren mit der Pigmentpaste bzw. Pigmentdispersion zu vermischen.

Die erfindungsgemäßen Anstrichmittel enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel, Pigment und Hilfsmittel, bezogen auf den Feststoffgehalt des Anstrichmittels. Bei den flüchtigen Bestandteilen handelt es sich vorwiegend um Wasser.

Das erfindungsgemäße Anstrichmittel kann in üblicher Weise auf Substrate aufgebracht werden, z. B. durch Streichen, Spritzen, Tauchen, Rollen, Rakeln etc.

Es wird vorzugsweise als Bautenanstrichmittel, d. h. zum Beschichten von Gebäuden oder Gebäudeteilen verwendet. Es kann sich dabei um mineralische Untergründe wie Putze, Gips- oder Gipskartonplatten, Mauerwerk oder Beton, um Holz, Holzwerkstoffe, Metall oder Papier, z. B. Tapeten oder Kunststoff, z. B. PVC, handeln.

Die erfindungsgemäßen Anstrichmittel zeichnen sich aus durch einfache Handhabung, gute Verarbeitungseigenschaften und verbesserte Color Retention aus. Die Anstrichmittel sind schadstoffarm. Sie haben gute anwendungstechnische Eigenschaften, z. B. eine gute Wasserfestigkeit, gute Nasshaftung, gute Blockfestigkeit, eine gute Überstreichbarkeit und sie zeigen beim Auftragen einen guten Verlauf. Das verwendete Arbeitsgerät lässt sich leicht mit Wasser reinigen.

Die Erfindung wird anhand der folgenden nicht einschränkenden Beispiele näher erläutert.

Beispiele

Erfindungsgemäßes Beispiel

In einem 4 I-Glasgefäß mit Ankerrührer, Heiz- und Kühlvorrichtungen sowie verschiedenen Zuläufen wurden bei 20 bis 25 °C (Raumtemperatur) und Atmosphärendruck (1 atm $\widehat{=}$ 1,013 bar absolut)

| | |
|---|---|
| 423,0 g | entionisiertes Wasser und |
| 14,0 g | einer 20 gew.-%igen wässrigen Lösung eines Fettalkoholpolyethoxylats (Lutensol® AT 18 der Firma BASF SE) |
| 18,7 g | einer 15 gew.-%igen wässrige Lösung des Natriumsalzes eines $C_{12}$-Alkylsulfats |
| 53,2 g | der Monomerenemulsion (siehe unten) |

vorgelegt und anschließend unter Rühren (140 UpM) auf eine Innentemperatur von 85 °C aufgeheizt. Nach Erreichen dieser Temperatur wurden 5 Gew.-% der Starterlösung in einer Portion zugegeben und die erhaltene Mischung für 5 Minuten gerührt. Daran anschließend wurden gleichzeitig beginnend die Gesamtmenge der Monomerenemulsion innerhalb von 185 Minuten und die verbleibende Menge der Starterlösung innerhalb von 195 Minuten kontinuierlich und mit gleichbleibenden Mengenströmen über räumlich getrennte Zuläufe zudosiert.

<div align="center">

Starterlösung:

| | |
|---|---|
| 7 g | Natriumperoxodisulfat |
| 93 g | entionisiertes Wasser |

</div>

<div align="center">

Monomerenemulsion:

</div>

| | |
|---|---|
| 814,0 g | entionisiertes Wasser |
| 10,6 g | einer 20 gew.-%igen wässrigen Lösung eines Fettalkoholpolyethoxylats (Lutensol® AT 18 der Firma BASF SE) |
| 47,0 g | einer 15 gew.-%igen wässrigen Lösung von Natriumlaurylsulfat |
| 169,6 g | Styrol |
| 301,8 g | n-Butylacrylat, |
| 590,2 g | Methylmethacrylat, |
| 307,4 g | Ethylhexylacrylat, |
| 14 g | Acrylsäure und |
| 28 g | einer 50 Gew.-%igen wässrigen Lösung von Acrylamid |

Daran anschließend ließ man das Reaktionsgemisch noch 15 Minuten bei vorgenannter Temperatur nachreagieren und kühlte dann das Gemisch auf Raumtemperatur ab. Danach wurde die erhaltene wässrige Polymerisatdispersion mit einer 25 gew.-%igen wässrigen Ammoniumhydroxidlösung auf einen pH Wert von 8 eingestellt. Die erhaltene Polymerisatdispersion hatte einen Feststoffanteil von 50,5 Gew.-%, einen zahlenmittleren Teilchendurchmesser von 130 nm und eine Glasübergangstemperatur von 17 °C.

Die Feststoffgehalte wurden generell bestimmt, indem eine definierte Menge der wässrigen Polymerisatdispersion (ca. 0,8 g) mit Hilfe des Feuchtebestimmers HR73 der Firma Mettler Toledo bei einer Temperatur von 130 °C bis zur Gewichtskonstanz getrocknet wurden (ca. 2 Stunden). Es wurden jeweils zwei Messung durchgeführt. Der jeweils angegebene Wert stellt den Mittelwert dieser Messungen dar.

Die zahlenmittleren Teilchendurchmesser der Polymerisatteilchen wurden generell durch dynamische Lichtstreuung an einer 0,005 bis 0,01 gewichtsprozentigen wässrigen Polymerisatdispersion bei 23 °C mittels eines Autosizers IIC der Fa. Malvern Instruments, England, ermittelt. Angegeben wird der mittlere Durchmesser der Kumulantenauswertung (cumulant z average) der gemessenen Autokorrelationsfunktion (ISO-Norm 13 321).

Vergleichsbeispiel

In einem 4 I-Glasgefäß mit Ankerrührer, Heiz- und Kühlvorrichtungen sowie verschiedenen Zuläufen wurden bei 20 bis 25 °C (Raumtemperatur) und Atmosphärendruck (1 atm $\triangleq$ 1,013 bar absolut)

| | |
|---|---|
| 423,0 g | entionisiertes Wasser und |
| 14,0 g | einer 20 Gew.-%igen wässrigen Lösung eines Fettalkoholpolyethoxylats (Lutensol® AT 18 der Firma BASF SE) |
| 18,7 g | einer 15 Gew.-%igen wässrige Lösung des Natriumsalzes eines $C_{12}$-Alkylsulfats |
| 53,2g | der Monomerenemulsion (siehe unten) |

vorgelegt und anschließend unter Rühren (140 UpM) auf eine Innentemperatur von 85 °C aufgeheizt. Nach Erreichen dieser Temperatur wurden 5 Gew.-% der Starterlösung in einer Portion zugegeben und die erhaltene Mischung für 5 Minuten gerührt. Daran anschließend wurden gleichzeitig beginnend die Gesamtmenge der Monomerenemulsion innerhalb von 185 Minuten und die verbleibende Menge der Starterlösung innerhalb von 195 Minuten kontinuierlich und mit gleichbleibenden Mengenströmen über räumlich getrennte Zuläufe zudosiert.

Starterlösung:

| | |
|---|---|
| 7 g | Natriumperoxodisulfat |
| 93 g | entionisiertes Wasser |

Monomerenemulsion:

| | |
|---|---|
| 821,0 g | entionisiertes Wasser |
| 30 g | einer 20 gew.-%igen wässrigen Lösung eines Fettalkoholpolyethoxylats (Lutensol® AT 18 der Firma BASF SE) |
| 50,0 g | einer 15 gew.-%igen wässrigen Lösung von Natriumlaurylsulfat |
| 758,2g | Methylmethacrylat, |
| 694,8g | Ethylhexylacrylat, |
| 18 g | Acrylsäure und |
| 41,8 g | einer 50 gew.-%igen wässrigen Lösung von Acrylamid |

Daran anschließend ließ man das Reaktionsgemisch noch 15 Minuten bei vorgenannter Temperatur nachreagieren und kühlte dann das Gemisch auf Raumtemperatur ab. Danach wurde die erhaltene wässrige Polymerisatdispersion mit einer 25 gew.-%igen wässrigen Ammoniumhydroxidlösung auf einen pH Wert von 8 eingestellt. Die erhaltene Polymerisatdispersion hatte einen Feststoffanteil von 50,5 Gew.-%, einen zahlenmittleren Teilchendurchmesser von 130 nm und eine Glasübergangstemperatur von 17 °C.

Anwendungstechnische Prüfungen

a) Herstellung der Farbformulierungen

Aus den in nachfolgender Tabelle 1 angegeben Bestandteilen (Mengen in g) wurden in der von oben nach unten angegebenen Reihenfolge bei Raumtemperatur unter Rühren mit einem Scheibenrührer bei 1000 Umdrehungen pro Minute die Farbformulierungen basierend auf der wässrigen, beispielhaften Polymerisatdispersionen hergestellt.

Tabelle 1 Farbformulierung A (leicht silikonisierte Fassadenfarbe)

| Farbformulierung | A |
|---|---|
| entionisiertes Wasser | 207,0 |
| Verdicker[1] | 3,0 |
| Dispergiermittel[2] | 4,0 |
| Dispergiermittel[3] | 3,0 |
| Bakterizid[4] | 2,0 |
| Entschäumer[5] | 2,0 |
| Pigment[6] | 100,0 |
| Füllstoff[7] | 135,0 |
| Füllstoff[8] | 222,0 |
| Polymerdispersion lt. Beispiel | 251,0 |
| Silikonharzemulsion[9] | 30,0 |
| Filmbildehilfsmittel[10] | 25,0 |
| Verdicker[11] | 8,5 |

[1] Bentone LT der Firma Elementis PLC, London, GB

[2] Pigmentverteiler MD20, BASF SE, Ludwigshafen

[3] 25 gew.-%ige wässrige Natriumpolyphosphatlösung, BK Giulini, Ladenburg

[4] Parmetol A26, Schülke & Mayr GmbH, Norderstedt

[5] Byk® 022 der Firma Byk Chemie GmbH

[5] Propylenglykol der Firma BASF SE

[6] Titandioxid Kronos® 2190 der Firma Kronos GmbH

[7] Finntalc® M 15 (Talk) der Firma Mondo Minerals B.V.

[8] Minex 10, Unimin Speciality Minerals Inc. USA

[9] Silres 1306, Wacker Chemie AG, Burghausen

[10] Butyldiglykol der Firma BASF SE

[11] Collacral PU70 der Firma BASF SE

Nach Zugabe der letzten Komponente rührte man noch 15 Minuten weiter und ließ anschließend die erhaltene Farbformulierung 1 Stunde ohne Rühren ruhen.

Die Farbformulierung besitzt einen Feststoffgehalt von ca. 58% und eine Pigmentvolumenkonzentration von 57.

In die Farbformulierung wurden zusätzlich Farbpasten eingerührt, um einen nennenswert tiefen, Pastellfarbton zu erhalten. Die Farben wurden vorzugsweise mit organischen Pigmenten eingefärbt, da diese Farben erfahrungsgemäß weniger stabil bei den künstlichen Bewitterungstests sind, als Farben mit anorganischen Pigmenten. Besonders sensibel haben Farben mit "Signalrot" als Abtönpaste (organisch) abgeschnitten, weshalb dieser Farbton oft als Prüffarbton zur Stabilitätsprüfung der Farben verwendet wurde. Es wurden jeweils 15g Pigmentpaste "Luconyl" der BASF SE auf jeweils 1000g Farbe lt. Rezeptur oben verwendet.

b) Herstellung der beschichteten Testsubstrate

Die vorgenannte Farbformulierung wurde derart mit einer Farbrolle auf Faserzementplatten der Größe 20 x 30 cm aufgetragen, dass das Flächengewicht (nass) jeweils 300 g/m$^2$ betrug. Anschließend wurden die so erhaltenen Beschichtungen für 7 Tage im Klimaraum bei 50 % relativer Luftfeuchtigkeit und 23 °C getrocknet.

c) Bewitterungsversuche

Zur künstlichen Prüfung der Bewitterungsstabilität der Farben auf Faserzemenplatten wird ein Xenontest nach DIN EN ISO 11341 (Cycle A) für Anstrichmittel durchgeführt und nach 500h (oder mit Suntest-Gerät nach 150 h) abgemustert. In diesem Xenontest werden beschichtete Faserzementplatten von 5 *13cm Größe jeweils im Wechsel 102 Minuten trocken beleuchtet und 18 Minuten beleuchtet, während die

Plättchen mit einem feinen Wassernebel befeuchtet werden. Die relative Luftfeuchtigkeit ist auf50% eingestellt und die Schwarzstandardtemperatur liegt bei 65°C. Die bestrahlungsstärke entspricht 60 W UV-Licht bei 300- 400nm oder 0,51 W/(m$^2$·nm) bei 340nm Lichtwellenlange. Die Beschichtungen auf Faserzementplatten wurden parallel zur künstlichen Bewitterung auch für Freibewitterung unterzogen. Dabei wurden die beschichteten Faserzementplatten mit der Beschichtung nach oben derart ausgerichtet, dass die Neigung zur Senkrechten 60 ° betrug (0 ° bedeutet senkrecht, 90 ° bedeutet horizontal zur Erdoberfläche). Insgesamt wurden die Beschichtungen nach Südwesten ausgerichtet. Nach gegebene Zeit wurden die Beschichtungen analog der Methodik wie bei der künstlichen Bewitterung mit einem Farbprüfgerät gemessen und die Farbabweichung Delta E im Vergleich zur unbewitterten Referenzfarbe auswertet.

Die Messung der Farbwerte nach Bewitterung muss nach völliger Durchtrocknung der Farbe erfolgen. Die Prüfung der Beschichtungen erfolgte durch Messung der Farbe nach DIN 6174: "Farbmetrische Bestimmung von Farbmaßzahlen und Farbabständen im angenähert gleichförmigen CIELAB-Farbenraum" vor und nach der Bewitterung (L*a*b*-Farbwerte) und ergab eine Farbabweichung durch Lagerung Delta E= Wurzel ($(L_1-L_2)^2+(a_1-a_2)^2+(b_1-b_2)^2$).

Tabelle 3

| Ergebnisse der Bewitterungsprüfungen<br>Man kann erkennen, das in allen Testmethoden in künstlicher Schnellbewitterung sowie in der Freibewitterung die erfindungsgemäße Testfarbe für alle aufgeführten organischen Farbpigmente ein geringeres Color Fading, basierend auf dem Farbunterschied DE, wie oben beschrieben) aufweist, als die Vergleichsfarbe mit einem Bindemittel nach dem Stand der Technik mit nur je einem Hauptmonomer M1 und M2. | | | | |
|---|---|---|---|---|
| | Delta E | | | |
| | 150 h Suntest | 500h Xenotest | 6 Monate Freibewitte | 12 Monate Freibewitterung |
| Erfindungsgemäße Farbe, Signalrot | | 2,5 | | 3,5 |
| Vergleichsfarbe, Signalrot | | 6,7 | | 8,2 |
| | | | | |
| Erfindungsgemäße Farbe, Dunkelblau | | | 5,6 | |
| Vergleichsfarbe, Dunkelblau | | | 6,09 | |
| | | | | |
| Erfindungsgemäße Farbe, Neutralrot | | | 7,78 | |
| Vergleichsfarbe, Neutralrot | | | 8,67 | |
| | | | | |
| Erfindungsgemäße Farbe, Signalrot | | | 4,77 | |
| Vergleichsfarbe, Signalrot | | | 5,51 | |
| | | | | |
| Erfindungsgemäße Farbe, Signalrot (PVK 60%) | 11,89 | | | |
| Vergleichsfarbe, Signalrot (PVK 60%) | 13,42 | | | |
| | | | | |
| Erfindungsgemäße Farbe, Reinorange | | | 3,31 | |
| Vergleichsfarbe, Reinorange | | | 4,13 | |
| | | | | |
| Erfindungsgemäße Farbe, Purviolett | | | 6,3 | |
| Vergleichsfarbe, Purviolett | | | 7,23 | |

(fortgesetzt)

Ergebnisse der Bewitterungsprüfungen

Man kann erkennen, das in allen Testmethoden in künstlicher Schnellbewitterung sowie in der Freibewitterung die erfindungsgemäße Testfarbe für alle aufgeführten organischen Farbpigmente ein geringeres Color Fading, basierend auf dem Farbunterschied DE, wie oben beschrieben) aufweist, als die Vergleichsfarbe mit einem Bindemittel nach dem Stand der Technik mit nur je einem Hauptmonomer M1 und M2.

| | Delta E | | | |
|---|---|---|---|---|
| | 150 h Suntest | 500h Xenotest | 6 Monate Freibewitte | 12 Monate Freibewitterung |
| | | | | |
| Erfindungsgemäße Farbe, Purviolett (PVK 60%) | 14,47 | | | |
| Vergleichsfarbe, Purviolett (PVK 60%) | 16,04 | | | |
| | | | | |
| Erfindungsgemäße Farbe, Gelb | | | 4,97 | |
| Vergleichsfarbe, Gelb | | | 6,46 | |
| | | | | |
| Erfindungsgemäße Farbe, Gelb (PVK 60%) | 9,65 | | | |
| Vergleichsfarbe, Gelb (PVK 60%) | 10,72 | | | |
| | | | | |
| Erfindungsgemäße Farbe, Grün-Gelb | | | 4,04 | |
| Vergleichsfarbe, Grün-Gelb | | | 4,76 | |
| | | | | |
| | Delta E | | | |
| | 150 h Suntest | 500h Xenotest | 6 Monate Freibewitterung | 12 Monate Freibewitterung |
| | | | | |
| Erfindungsgemäße Farbe, Dunkelblau | | | 5,6 | 7,7 |
| Vergleichsfarbe, Dunkelblau | | | 6,09 | 8,13 |
| | | | | |
| Erfindungsgemäße Farbe, Neutralrot | | | 7,78 | 10,09 |
| Vergleichsfarbe, Neutralrot | | | 8,67 | 10,7 |
| | | | | |
| Erfindungsgemäße Farbe, Signalrot | | 2,5 | 4,77 | 8,94 |
| Vergleichsfarbe, Signalrot | | 6,7 | 5,51 | 9,67 |

(fortgesetzt)

| | Delta E | | | |
|---|---|---|---|---|
| | 150 h Suntest | 500h Xenotest | 6 Monate Freibewitterung | 12 Monate Freibewitterung |
| | | | | |
| Erfindungsgemäße Farbe, Signalrot (PVK 60%) | 11,89 | | | |
| Vergleichsfarbe, Signalrot (PVK 60%) | 13,42 | | | |
| Erfindungsgemäße Farbe, Reinorange | | | 3,31 | 7,37 |
| Vergleichsfarbe, Reinorange | | | 4,13 | 8,97 |
| Erfindungsgemäße Farbe, Purviolett | | | 6,3 | 11,2 |
| Vergleichsfarbe, Purviolett | | | 7,23 | 11,36 |
| | | | | |
| Erfindungsgemäße Farbe, Purviolett (PVK 60%) | 14,47 | | | |
| Vergleichsfarbe, Purviolett (PVK 60%) | 16,04 | | | |
| | | | | |
| Erfindungsgemäße Farbe, Gelb | | | 4,97 | 12,85 |
| Vergleichsfarbe, Gelb | | | 6,46 | 13,94 |
| | | | | |
| Erfindungsgemäße Farbe, Gelb (PVK 60%) | 9,65 | | | |
| Vergleichsfarbe, Gelb (PVK 60%) | 10,72 | | | |
| | | | | |
| Erfindungsgemäße Farbe, Grün-Gelb | | | 4,04 | 6,6 |
| Vergleichsfarbe, Grün-Gelb | | | 4,76 | 6,77 |

**Patentansprüche**

1. Verwendung einer wässrigen Polymerisatdispersion, enthaltend

   (a) mindestens zwei Monomere M1 mit einer Glasübergangstemperatur ≥ 25 °C,
   (b) mindestens zwei Monomere M2 mit einer Glasübergangstemperatur < 25°C

   sowie gegebenenfalls weitere Monomere M3, als Bindemittel in Beschichtungsmitteln zur Verbesserung der Color Retention.

2. Verwendung der wässrigen Polymerisatdispersion gemäß Anspruch 1, **dadurch gekennzeichnet, dass** es sich bei dem Beschichtungsmittel um eine Fassadenfarbe handelt.

3.  Verwendung der wässrigen Polymerisatdispersion gemäß einem der Ansprüche 1 oder 2, **dadurch gekennzeichnet, dass** man bei den Monomeren M1 und M2 jeweils ein hydrophileres und je ein hydrophoberes Monomer einsetzt.

4.  Verwendung der wässrigen Polymerdispersion gemäß einem der Ansprüche 1 bis 3, **dadurch gekennzeichnet, dass** die Monomere M1 ausgewählt sind aus der Gruppe der vinylaromatischen Verbindungen, wie Vinyltoluol, alpha- und para-Methyl-styrol, alpha-Butylstyrol, 4-n-Butylstyrol, C1- bis C4-Alkylmethacrylate wie MMA, Ethylmethacrylat, n-Propylmethacrylat, i-Propylmethacrylat, n-Butylmethycrylat, t-Butylacrylat, i-Butylmethacrylat, t-Butylmethacrylat, t-Butylacrylat, CyclohexylmethacrylatStearylacrylat, Vinylacetat, Vinylchlorid, ethylenisch ungesättigten Nitrile, Vinylhalogenide, Vinylether z. B. Vinylmethylether oder Vinylisobutylether oder der Kohlenwasserstoffe mit 4 bis 8 C-Atomen und zwei olefinischen Doppelbindungen.

5.  Verwendung der wässrigen Polymerdispersion gemäß einem der Ansprüche 1 bis 4, **dadurch gekennzeichnet, dass** die Monomere M1 ausgewählt sind aus Styrol/ Methylmethacrylat oder Cyclohexylmethacrylat/Methylmethacrylat.

6.  Verwendung der wässrigen Polymerdispersion gemäß einem der Ansprüche 2 bis 5, **dadurch gekennzeichnet, dass** die Monomere M2 ausgewählt sind aus der Gruppe der C1- bis C20-Alkylacrylate, wie Methylacrylat, Ethylacrylat, n- und i-Propylacrylat, n-, i- und sec-Butylacrylat, n- und i-Pentylacrylat, n-Hexylacrylat, 2-Ethylhexylacrylat, Heptylacrylat, Octylacrylat, C10-Isoamylguerbetacrylat, 2-Propylpentylacrylat, 1-Propylheptylacrylat, Laurylacrylat, C5- bis C20-Alkylmethacrylate wie n- und iso-Pentylmethacrylat, n-Hexylmethacrylat, Heptylmethacrylat, Octylmethacrylat, C10-Isoamylguerbetmethacrylat, 2-Propylpentylmethacrylat, 2-Propylheptylmethacrylat, Laurylmethacrylat, Vinylester von unverzweigten oder verzweigten Carbonsäuren mit 2 bis 11 C-Atomen, wie Vinylpropionat, Vinylbutyrat, 1-Methylvinylacetat, Vinylpivalat und Vinylester von $\alpha$-verzweigten Monocarbonsäuren mit 9 C-Atomen (VeoVa9[R], Handelsname der Firma Shell), wie Vinyl-2-Ethyl-hexanoat, Vinyllaurat, Vinylester von $\alpha$-verzweigten Monocarbonsäuren mit 10 oder 11 C-Atomen (VeoVa10[R], VeoVa11[R], Handelsname der Firma Shell) und Vinylester von verzweigten Monocarbonsäuren mit 10 bis 13 C-Atomen (Exxar Neo12), C1-C20-Vinylether, wie Methylvinylether, Ethylvinylether, Propylvinylether, Butylvinylether, Pentylvinylether, Hexylvinylether, Heptylvinylether, Octylvinylether, Nonylylvinylether, Decylvinylether, Butadien, Vinylidenchlorid oder Butandiolmonoacrylat.

7.  Verwendung der wässrigen Polymerdispersion gemäß einem der Ansprüche 2 bis 6, **dadurch gekennzeichnet, dass** die Monomere M2 ausgewählt sind aus der Gruppe n-Butylacrylat/Ethylhexylacrylat.

8.  Verwendung der wässrigen Polymerdispersion gemäß einem der Ansprüche 2 bis 7, **dadurch gekennzeichnet, dass** die Monomere M3 ausgewählt sind aus der Gruppe Acrylsäure, Methacrylsäure, Acrylamid, Hydroxyethyl(meth)acrylat oder Hydroxypropyl(meth)acrylat.

9.  Verwendung der wässrigen Polymerdispersion gemäß einem der Ansprüche 2 bis 8, **dadurch gekennzeichnet, dass** das Bindemittel 17 bis 27% Monomere M1 (gerechnet auf Basis Methylmethacrylat/Styrol), 68 - 77 % Monomere M2 und 0,1 bis 10% Monomere M3 (gerechnet auf n-Butylacrylat/2-Ethylhexylacrylat), wobei die Styrolmenge bei den Monomeren M1 im Bereich von 5-15% liegt, enthält.

10. Verwendung der wässrigen Polymerdispersion gemäß einem der Ansprüche 2 bis 8, **dadurch gekennzeichnet, dass** das Bindemittel 34 bis 44% Monomere M1 (gerechnet auf Basis Methylmethacrylat/Styrol), 49 - 59 % Monomere M2 und 0,1 bis 10% Monomere M3 (gerechnet auf n-Butylacrylat/2-Ethylhexylacrylat), wobei die Styrolmenge bei den Monomeren M1 im Bereich von 10-20% liegt, enthält.

11. Verwendung der wässrigen Polymerdispersion gemäß einem der Ansprüche 2 bis 8, **dadurch gekennzeichnet, dass** das Bindemittel 37 bis 47% Monomere M1 (gerechnet auf Basis Methylmethacrylat/Styrol), 48 - 58 % Monomere M2 und 0,1 bis 10% Monomere M3 (gerechnet auf n-Butylacrylat/2-Ethylhexylacrylat), wobei die Styrolmenge bei den Monomeren M1 im Bereich von 10-25% liegt, enthält.

12. Verwendung der wässrigen Polymerdispersion gemäß einem der Ansprüche 2 bis 8, **dadurch gekennzeichnet, dass** das Bindemittel 60 bis 70% Monomere M1 (gerechnet auf Basis Methylmethacrylat/Styrol), 24 - 34 % Monomere M2 uns 0,1 bis 10% Monomere M3 (gerechnet auf n-Butylacrylat/2-Ethylhexylacrylat), wobei die Styrolmenge bei den Monomeren M1 im Bereich von 10-25% liegt, enthält.

**Claims**

1. The use of an aqueous polymer dispersion comprising

    (a) at least two monomers M1 having a glass transition temperature ≥ 25°C,
    (b) at least two monomers M2 having a glass transition temperature < 25°C,

    and also, optionally, further monomers M3, as binder in coating materials for improving color retention.

2. The use of the aqueous polymer dispersion according to claim 1, wherein the coating material is an exterior paint.

3. The use of the aqueous polymer dispersion according to either of claims 1 and 2, wherein for the monomers M1 and M2 in each case a more hydrophilic monomer and a more hydrophobic monomer are used.

4. The use of the aqueous polymer dispersion according to any of claims 1 to 3, wherein the monomers M1 are selected from the group consisting of vinylaromatic compounds, such as vinyltoluene, alpha- and para-methylstyrene, alpha-butylstyrene, 4-n-butylstyrene, C1 to C4 alkyl methacrylates such as MMA, ethyl methacrylate, n-propyl methacrylate, isopropyl methacrylate, n-butyl methacrylate, tert-butyl acrylate, isobutyl methacrylate, tert-butyl methacrylate, tert-butyl acrylate, cyclohexyl methacrylate, stearyl acrylate, vinyl acetate, vinyl chloride, ethylenically unsaturated nitriles, vinyl halides, vinyl ethers, e.g., vinyl methyl ether or vinyl isobutyl ether, or of hydrocarbons having 4 to 8 C atoms and two olefinic double bonds.

5. The use of the aqueous polymer dispersion according to any of claims 1 to 4, wherein the monomers M1 are selected from styrene/methyl methacrylate or cyclohexyl methacrylate/methyl methacrylate.

6. The use of the aqueous polymer dispersion according to any of claims 2 to 5, wherein the monomers M2 are selected from the group consisting of C1 to C20 alkyl acrylates, such as methyl acrylate, ethyl acrylate, n- and isopropyl acrylate, n-, iso-, and sec-butyl acrylate, n- and isopentyl acrylate, n-hexyl acrylate, 2-ethylhexyl acrylate, heptyl acrylate, octyl acrylate, C10 isoamyl guerbet acrylate, 2-propylpentyl acrylate, 1-propylheptyl acrylate, lauryl acrylate, C5 to C20 alkyl methacrylates such as n- and isopentyl methacrylate, n-hexyl methacrylate, heptyl methacrylate, octyl methacrylate, C10 isoamyl guerbet methacrylate, 2-propylpentyl methacrylate, 2-propylheptyl methacrylate, lauryl methacrylate, vinyl esters of unbranched or branched carboxylic acids having 2 to 11 C atoms, such as vinyl propionate, vinyl butyrate, 1-methylvinyl acetate, vinyl pivalate, and vinyl esters of $\alpha$-branched monocarboxylic acids having 9 C atoms (VeoVa9[R], trade name of Shell), such as vinyl 2-ethylhexanoate, vinyl laurate, vinyl esters of $\alpha$-branched monocarboxylic acids having 10 or 11 C atoms (VeoVa10[R], VeoVa11[R], trade name of Shell), and vinyl esters of branched monocarboxylic acids having 10 to 13 C atoms (Exxar Neo12), C1-C20 vinyl ethers, such as methyl vinyl ether, ethyl vinyl ether, propyl vinyl ether, butyl vinyl ether, pentyl vinyl ether, hexyl vinyl ether, heptyl vinyl ether, octyl vinyl ether, nonyl vinyl ether, decyl vinyl ether, butadiene, vinylidene chloride, or butanediol monoacrylate.

7. The use of the aqueous polymer dispersion according to any of claims 2 to 6, wherein the monomers M2 are selected from the group n-butyl acrylate/ethylhexyl acrylate.

8. The use of the aqueous polymer dispersion according to any of claims 2 to 7, wherein the monomers M3 are selected from the group acrylic acid, methacrylic acid, acrylamide, hydroxyethyl (meth)acrylate, or hydroxypropyl (meth)acrylate.

9. The use of the aqueous polymer dispersion according to any of claims 2 to 8, wherein the binder comprises 17 to 27% of monomers M1 (calculated on the basis of methyl methacrylate/styrene), 68 - 77% of monomers M2, and 0.1 to 10% of monomers M3 (calculated on n-butyl acrylate/2-ethylhexyl acrylate), the amount of styrene in the case of the monomers M1 being in the range of 5 - 15%.

10. The use of the aqueous polymer dispersion according to any of claims 2 to 8, wherein the binder comprises 34 to 44% of monomers M1 (calculated on the basis of methyl methacrylate/styrene), 49 - 59% of monomers M2, and 0.1 to 10% of monomers M3 (calculated on n-butyl acrylate/2-ethylhexyl acrylate), the amount of styrene in the case of the monomers M1 being in the range of 10 - 20%.

11. The use of the aqueous polymer dispersion according to any of claims 2 to 8, wherein the binder comprises 37 to 47% of monomers M1 (calculated on the basis of methyl methacrylate/styrene), 48 - 58% of monomers M2, and 0.1 to 10% of monomers M3 (calculated on n-butyl acrylate/2-ethylhexyl acrylate), the amount of styrene in the case of the monomers M1 being in the range of 10 - 25%.

12. The use of the aqueous polymer dispersion according to any of claims 2 to 8, wherein the binder comprises 60 to 70% of monomers M1 (calculated on the basis of methyl methacrylate/styrene), 24 - 34% of monomers M2, and 0.1 to 10% of monomers M3 (calculated on n-butyl acrylate/2-ethylhexyl acrylate), the amount of styrene in the case of the monomers M1 being in the range of 10 - 25%.

**Revendications**

1. Utilisation d'une dispersion aqueuse de polymère contenant :

   (a) au moins deux monomères M1 ayant une température de transition vitreuse $\geq$ 25 °C,
   (b) au moins deux monomères M2 ayant une température de transition vitreuse < 25 °C,

   ainsi qu'éventuellement d'autres monomères M3, en tant que liant dans des agents de revêtement pour l'amélioration de la rétention de couleur.

2. Utilisation de la dispersion aqueuse de polymère selon la revendication 1, **caractérisée en ce que** l'agent de revêtement consiste en une peinture de façade.

3. Utilisation de la dispersion aqueuse de polymère selon l'une quelconque des revendications 1 ou 2, **caractérisée en ce qu'**un monomère plus hydrophile et un monomère plus hydrophobe sont utilisés à chaque fois en tant que monomères M1 et M2.

4. Utilisation de la dispersion aqueuse de polymère selon l'une quelconque des revendications 1 à 3, **caractérisée en ce que** les monomères M1 sont choisis dans le groupe constitué par les composés aromatiques de vinyle, tels que le vinyltoluène, l'alpha- et le para-méthylstyrène, l'alpha-butylstyrène, le 4-n-butyl-styrène, les méthacrylates d'alkyle en C1 à C4 tels que le MMA, le méthacrylate d'éthyle, le méthacrylate de n-propyle, le méthacrylate d'i-propyle, le méthacrylate de n-butyle, l'acrylate de t-butyle, le méthacrylate d'i-butyle, le méthacrylate de t-butyle, l'acrylate de t-butyle, le méthacrylate de cyclohexyle, l'acrylate de stéaryle, l'acétate de vinyle, le chlorure de vinyle, les nitriles éthyléniquement insaturés, les halogénures de vinyle, les éthers de vinyle, p. ex. l'éther méthylique de vinyle ou l'éther isobutylique de vinyle, ou les hydrocarbures contenant 4 à 8 atomes C et deux doubles liaisons oléfiniques.

5. Utilisation de la dispersion aqueuse de polymère selon l'une quelconque des revendications 1 à 4, **caractérisée en ce que** les monomères M1 sont choisis parmi le styrène/méthacrylate de méthyle ou le méthacrylate de cyclohexyle/méthacrylate de méthyle.

6. Utilisation de la dispersion aqueuse de polymère selon l'une quelconque des revendications 2 à 5, **caractérisée en ce que** les monomères M2 sont choisis dans le groupe constitué par les acrylates d'alkyle en C1 à C20, tels que l'acrylate de méthyle, l'acrylate d'éthyle, l'acrylate de n- et i-propyle, l'acrylate de n-, i- et sec-butyle, l'acrylate de n- et i-pentyle, l'acrylate de n-hexyle, l'acrylate de 2-éthylhexyle, l'acrylate d'heptyle, l'acrylate d'octyle, l'acrylate de Guerbet d'isoamyle en C10, l'acrylate de 2-propylpentyle, l'acrylate de 1-propylheptyle, l'acrylate de lauryle, les méthacrylates d'alkyle en C5- à C20 tels que le méthacrylate de n- et iso-pentyle, le méthacrylate de n-hexyle, le méthacrylate d'heptyle, le méthacrylate d'octyle, le méthacrylate de Guerbet d'isoamyle en C10, le méthacrylate de 2-propylpentyle, le méthacrylate de 2-propylheptyle, le méthacrylate de lauryle, les esters de vinyle d'acides carboxyliques non ramifiés ou ramifiés de 2 à 11 atomes C, tels que le propionate de vinyle, le butyrate de vinyle, l'acétate de 1-méthylvinyle, le pivalate de vinyle et les esters de vinyle d'acides monocarboxyliques $\alpha$-ramifiés de 9 atomes C (VeoVa9[R], nom commercial de la société Shell), tels que l'hexanoate de vinyl-2-éthyle, le laurate de vinyle, les esters de vinyle d'acides monocarboxyliques $\alpha$-ramifiés de 10 ou 11 atomes C (VeoVa10[R], VeoVa11[R], nom de commerce de la société Shell) et les esters de vinyle d'acides monocarboxyliques ramifiés de 10 à 13 atomes C (Exxar Neo12), les éthers de vinyle en C1-C20, tels que l'éther de méthylvinyle, l'éther d'éthylvinyle, l'éther de propylvinyle, l'éther de butylvinyle, l'éther de pentylvinyle, l'éther d'hexylvinyle, l'éther d'heptylvinyle, l'éther d'octylvinyle, l'éther de nonylvinyle, l'éther de décylvinyle, le butadiène, le chlorure de vinylidène ou le monoacrylate de butanediol.

7.  Utilisation de la dispersion aqueuse de polymère selon l'une quelconque des revendications 2 à 6, **caractérisée en ce que** les monomères M2 sont choisis dans le groupe constitué par l'acrylate de n-butyle/acrylate d'éthylhexyle.

8.  Utilisation de la dispersion aqueuse de polymère selon l'une quelconque des revendications 2 à 7, **caractérisée en ce que** les monomères M3 sont choisis dans le groupe constitué par l'acide acrylique, l'acide méthacrylique, l'acrylamide, le (méth)acrylate d'hydroxyéthyle ou le (méth)acrylate d'hydroxypropyle.

9.  Utilisation de la dispersion aqueuse de polymère selon l'une quelconque des revendications 2 à 8, **caractérisée en ce que** le liant contient 17 à 27 % de monomères M1 (calculé à base de méthacrylate de méthyle/styrène), 68 à 77 % de monomères M2 et 0,1 à 10 % de monomères M3 (calculé à base d'acrylate de n-butyle/acrylate de 2-éthylhexyle), la quantité de styrène dans les monomères M1 se situant dans la plage allant de 5 à 15 %.

10. Utilisation de la dispersion aqueuse de polymère selon l'une quelconque des revendications 2 à 8, **caractérisée en ce que** le liant contient 34 à 44 % de monomères M1 (calculé à base de méthacrylate de méthyle/styrène), 49 à 59 % de monomères M2 et 0,1 à 10 % de monomères M3 (calculé à base d'acrylate de n-butyle/acrylate de 2-éthylhexyle), la quantité de styrène dans les monomères M1 se situant dans la plage allant de 10 à 20 %.

11. Utilisation de la dispersion aqueuse de polymère selon l'une quelconque des revendications 2 à 8, **caractérisée en ce que** le liant contient 37 à 47 % de monomères M1 (calculé à base de méthacrylate de méthyle/styrène), 48 à 58 % de monomères M2 et 0,1 à 10 % de monomères M3 (calculé à base d'acrylate de n-butyle/acrylate de 2-éthylhexyle), la quantité de styrène dans les monomères M1 se situant dans la plage allant de 10 à 25 %.

12. Utilisation de la dispersion aqueuse de polymère selon l'une quelconque des revendications 2 à 8, **caractérisée en ce que** le liant contient 60 à 70 % de monomères M1 (calculé à base de méthacrylate de méthyle/styrène), 24 à 34 % de monomères M2 et 0,1 à 10 % de monomères M3 (calculé à base d'acrylate de n-butyle/acrylate de 2-éthylhexyle), la quantité de styrène dans les monomères M1 se situant dans la plage allant de 10 à 25 %.

**EP 2 920 262 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 771328 A
- WO 9925780 A
- US 4733005 A
- EP 0789724 A
- US 4269749 A
- EP 81083 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A

**In der Beschreibung aufgeführte Nicht-Patentliteratur**

- **T.G. FOX.** *Bull. Am. Phys. Soc.,* 1956, 123
- Ullmann's Encyclopädie der technischen Chemie. Verlag Chemie, 1980, vol. 19, 18
- Ullmann's Ecyclopedia of Industrial Chemistry. VCH, 1992, vol. A21, 169
- **J. BRANDRUP ; E.H. IMMERGUT.** Polymer Handbook. J. Wiley, 1966
- POLYMER HANDBOOK. J. Wiley, 1975
- POLYMER HANDBOOK. J. Wiley, 1989
- Methoden der organischen Chemie. **HOUBEN-WEYL.** Makromolekulare Stoffe. Georg Thieme Verlag, 1961, vol. XIV/1, 411-420
- Methoden der organischen Chemie. **HOUBEN-WEYL.** Makromolekulare Stoffe. Georg Thieme Verlag, 1961, vol. 14/1, 192-208
- Methoden der organischen Chemie. **HOUBEN-WEYL.** Makromolekulare Stoffe. Georg-Thieme-Verlag, 1961, vol. XIV/1, 192-208
- Analysis of Polymer Dispersions with an Eight-Cell-AUC-Multiplexer: High Resolution Particle Size Distribution and Density Gradient Techniques. **S.E. HARDING et al.** Analytical Ultracentrifugation in Biochemistry and Polymer Science. Royal Society of Chemistry, 1992, 147-175